# EUROPEAN PATENT APPLICATION

(11) **EP 2 669 860 A1**
(43) Date of publication of application: **04.12.2013**
(21) Application number: 12822745.1
(22) Date of filing: 24.01.2012
(51) Int. Cl.: G06Q 30/02

(54) **CHARGER INFORMATION DISTRIBUTION DEVICE**

(30) Priority: 10.08.2011 JP 2011175415
(71) Applicant: Hitachi Solutions, Ltd., Tokyo 140-0002 (JP)
(72) Inventor: OHAMA Nobuyuki, Tokyo 140-0002 (JP)
(74) Representative: Liesegang, Eva
(86) International application number: PCT/JP2012/051448
(87) International publication number: WO 2013/021663

(57) **Abstract**

A charger management device for performing state monitoring and user authentication for a charger for a vehicle equipped with a secondary battery (chargeable battery) includes a charging data acquisition unit that acquires at least one of items of a charger user identification number, a charging spot ID identifying a charger installed location, a charging start time, a battery remaining amount at start of charging, and a battery remaining amount at end of charging; a charging data rearranging/separating unit that rearranges and separates the charging data by the at least one of the items; a charging spot ID utilization order calculation unit that calculates in what order charging spots are being utilized on an item by item basis; a charging spot successive utilization tendency computation unit that computes, on the basis of the result of calculation by the charging spot ID utilization order calculation unit, in what order the charging spots are being used successively; and a successive utilization tendency distribution unit that distributes a computation result to a user terminal held by a user. Thus, in a charger remote management technology for a vehicle equipped with a secondary battery, information about where charging should be performed next time, and information about a charger that can be expected to be not crowded can be supplied to the user during charging.

## Description

### TECHINICAL FIELD

The present invention relates to a charger management system for state monitoring and authentication for a charger for a vehicle equipped with a secondary battery, such as an electric automobile, the charger management system distributing information useful for consideration of a charger to be utilized.

### BACKGROUND ART

A device for charging a secondary battery in cellular phones or electric automobiles is disclosed in Patent Document 1, for example.

Patent Document 1: JP Patent Publication (Kokai) No. 6-189466 A (1994)

Non-patent Document 1: http://www.c-nexco.co.jp/guide/ev_quick.html
The charging methods for electric automobiles in Japan can be roughly categorized into normal charging and quick charging. The former uses a charging function built inside the car and requires only a household outlet and a cable other than the car. For this method, no charger management system that the present specification is directed to is currently in widespread use. The latter is controlled by an external charging facility, and charger management systems have been devised and are being utilized as an actual service. The description in the present specification mainly presupposes the latter charging method; however, the latter charging method is not excluded.

A management system for an electric automobile charger is also disclosed in the above Non-patent Document 1.

### SUMMARY OF THE INVENTION

### PROBLEM TO BE SOLVED BY THE INVENTION

General gasoline vehicles and the like simply require the fueling of gasoline and the like. Normally, the fuelling station cannot acquire onboard information, such as the remaining amount of fuel, nor acquiring such information provides not much merit. On the other hand, in the case of an electric automobile system that is digitalized and that communicates with the vehicle at the time of charging, data such as the remaining amount of battery and the like can be easily acquired. A mechanism for distributing information about the next charging spot and the like to the user on the basis of such data acquired at the charging spot (hereafter referred to as "charging data") is considered highly beneficial to the users of electric automobiles because of the limited number of charging spots and the relatively small range of the vehicle.

However, the currently known technologies for charger management systems are related to mechanisms for charger state monitoring and authentication, for example, and no mechanism for providing charging spot navigation is known.

An object of the present invention is to increase user convenience by providing charging spot navigation and thereby contribute to the promotion of utilization of chargers being managed.

### MEANS FOR SOLVING THE PROBLEMS

The present invention is characterized in that the charging spot utilization tendency, particularly a successive utilization tendency, is distributed to a user looking to know, during charging, for example, which charging spot he should use, next time, or a user looking for a charger that can be expected to be not crowded. The mechanism for distributing information based on data obtained during charging, particularly the successive charging spot utilization tendency indicating that point B is likely to be utilized as a charging spot following point A, for example, is effective for a user considering while charging, for example, where he should charge next time, or a user who is looking for a charger that he can expect to be not crowded after having seen or learned about, by some means, a charger being congested or out of order.

According to an aspect of the present invention, a charger management device for performing state monitoring and user authentication for a charger for a vehicle equipped with a secondary battery (chargeable battery) includes a charging data acquisition unit that acquires at least one of items of a charger user identification number, a charging spot ID identifying a charger installed location, a charging start time, a battery remaining amount at start of charging, and a battery remaining amount at end of charging; a charging data rearranging/separating unit that rearranges and separates (sorts) the charging data by the at least one of the items; a charging spot ID utilization order calculation unit that calculates in what order charging spots are being utilized on an item by item basis; a charging spot successive utilization tendency computation unit that computes, on the basis of the result of calculation by the charging spot ID utilization order calculation unit, in what order the charging spots are being used successively; and a successive utilization tendency distribution unit that distributes a computation result to a user terminal held by a user.

By sorting the charging data by one or more arbitrary selected items and calculating the successive utilization tendency on the basis of the resultant data, the successive utilization tendency focusing on the selected items can be determined.

As the items, time bands, seasons, special factors, remaining amounts, the user ID and the like may be considered. The items may be inputted via a UI, for example.

The charging data rearranging/separating unit may separate the charging data by the user identification number at predetermined regular time intervals, and rearrange the data by the charging start time. The charging spot ID utilization order calculation unit may calculate in what order the charging spot IDs are being utilized on the basis of all of the separated charging data. The charging spot successive utilization tendency computation unit may derive a charging spot successive utilization tendency indicating at which location the next charging is often performed after charging is performed at one location.

In this way, by rearranging by the charger user identification number, the successive utilization tendency suitable for one's own vehicle can be extracted (which is the most general).

The charger management device may further include an inter-charging spot distance acquisition unit that acquires the distance between the charging spots; and a charging spot elimination unit that, when the charging spot successive utilization tendency is derived, compares a first capacity value which is the difference between the at-end battery remaining amount at the time of previous charging and the at-start battery remaining amount at the time of ongoing current charging, with a second capacity value which is a minimum required battery capacity between the charging spots that is calculated from a maximum range that can be travelled based on the charger and the inter-charging spot distance, excluding from the charging data when the second capacity value is greater than the first capacity value.

When the distance having been travelled is improbable, it can be estimated that charging by a charger that is not being managed has been performed. Thus, by eliminating the data pertaining to the non-managed charger from the basis of computation of the successive utilization tendency, more accurate data can be distributed.

On the other hand, when charging by a charger not being managed has been performed, relevant charging records may be classified by all of combinations of charging spot sections connecting two charging spots, for example, to acquire statistics data, such as the number of cases. The data may be transmitted to a manager terminal device and utilized for more multifaceted management.

The successive utilization tendency distribution unit may distribute the successive utilization tendency with regard to all of the charging spots being managed to the user terminal regardless of whether charging is currently ongoing or not. In this way, the tendency of flow at all of the charging spots can be known.

The successive utilization tendency distribution unit may distribute a charging time interval at each charging spot to the user terminal simultaneously with a successive utilization tendency with regard to all of the charging spots being managed, regardless of whether charging is currently ongoing or not. In this way, the tendency of flow and the charging interval at all of the charging spots can be known.

The successive utilization tendency distribution unit may perform distribution to a remotely managed device that remotely manages the charger, instead of to the user terminal. The charger management device may further include an additional service implementing means that performs information distribution additionally to charging service. By distributing previously registered peripheral information together with the successive utilization tendency and thereby notifying the user about a facility or the like that can be utilized at the time of charging, the user can be informed about an event or the like that may take place at the time of charging, thus facilitating the selection of the charger.

The additional service implementing means may be implemented as bundle software on an OSGi framework. By modularizing the configuration including the additional service implementing means, the addition of a function can be implemented without seeking a system.

According to another aspect of the present invention, a charger management method for performing state monitoring and user authentication for a charger for a vehicle equipped with a secondary battery (chargeable battery) includes a charging data acquisition step of acquiring charging data including at least one of items of a charger user identification number, a charging spot ID identifying a charger installed location, a charging start time, a battery remaining amount at start of charging, and a battery remaining amount at end of charging; a charging data rearranging/separating step of rearranging and separating (sorting) the charging data by the at least one of the items; a charging spot ID utilization order calculation step of calculating in what order charging spots are being utilized on an item by item basis; a charging spot successive utilization tendency computation step of computing in what order the charging spots are being successively used, on the basis of the result of calculation in the charging spot ID utilization order calculation step; and a successive utilization tendency distribution step of distributing a computation result to a user terminal held by a user.

The charging data rearranging/separating step may separate the charging data by the user identification number at predetermined regular time intervals, and rearrange the data by the charging start time; the charging spot ID utilization order calculation step may calculate in what order the charging spot IDs are being utilized on the basis of all of the separated charging data; and the charging spot successive utilization tendency computation step may derive a charging spot successive utilization tendency indicating at which location the next charging is often performed after charging is performed at one location.

The charger management method may further include an inter-charging spot distance acquisition step of acquiring the distance between the charging spots; and a charging spot elimination step of, when the charging spot successive utilization tendency is derived, comparing a first capacity value which is the difference between an at-end battery remaining amount at the time of previous charging and an at-start battery remaining amount at the time of ongoing current charging, with a second capacity value which is a minimum required battery capacity between the charging spots that is calculated from a maximum range that can be travelled based on the charger and the inter-charging spot distance, and eliminating from the charging data when the second capacity value is greater than the first capacity value.

The present invention may include a program for causing a computer to implement the charger management method, and a computer-readable recording medium in which the program is recorded.

The present specification encompasses the contents of the specification and/or drawings of Japanese patent application JP 2011-175415 on which the priority of the present application is based.

### EFFECTS OF THE INVENTION

According to the present invention, information which is useful when looking for, during charging, a charger that can be utilized for the next time or a charger that can be expected to be not crowded can be obtained. Thus, user convenience can be increased, and utilization of a charger that is being managed can be promoted.

### BRIEF DESCRIPTION OF DRAWINGS

FIG. 1A is a functional block diagram of a configuration example of a charger management system according to a first embodiment of the present invention.
FIG. 1B is a functional block diagram of a configuration example of a charging data history analysis means of the charger management system according to the present embodiment.
FIG. 2 illustrates an example of charging data history in the charger management system according to the present embodiment.
FIG. 3(a) illustrates an example of charging spot information in the charger management system according to the present embodiment, and FIG. 3(b) illustrates an example of inter-charging spot distance information.
FIG. 4 is a sequence diagram for charging data list display in the charger management system according to the present embodiment.
FIG. 5 is a sequence diagram for remote operation instruction in the charger management system according to the present embodiment.
FIG. 6 is a sequence diagram for state monitoring at the time of charger utilization and information distribution in the charger management system according to the present embodiment.
FIG. 7 is a flowchart of a procedure for deriving successive utilization tendency for the successive number of times of two in the charger management system according to the present embodiment.
FIG. 8(a) illustrates an example of user ID-based charging data history for the user ID = 1 immediately after step 602 in FIG. 6, and FIG. 8(b) illustrates an example of user ID-based charging data history for the user ID = 22 immediately after step 602.
FIG. 9 illustrates an example of successive utilization tendency for the successive number of times of two in the charger management system according to the present embodiment.
FIG. 10 illustrates an example of distribution content in the case of utilization of the charging spot ID = 1 in the charger management system according to the present embodiment.
FIG. 11 is a sequence diagram of a successive utilization tendency information distribution process according to a second embodiment of the present invention.
FIG. 12(a) illustrates a first distribution content example according to a second embodiment of the second embodiment of the present invention, and FIG. 12(b) illustrates a second distribution content example.
FIG. 13 is a functional block diagram of a system configuration example of the charger management system according to a third embodiment of the present invention.
FIG. 14 is a sequence diagram of the charger management system according to the third embodiment of the present invention.
FIG. 15 is a sequence diagram of a procedure for deriving successive utilization tendency for the successive number of times of three.
FIG. 16 illustrates an example of successive utilization tendency for the successive number of times of three.
FIG. 17 illustrates a basis for determining the successive utilization tendency by sorting only by the at-end remaining amount of 80(5) based on FIG. 2.
FIG. 18 illustrates a basis for determining the successive utilization tendency by sorting only by the charging start time of morning based on FIG. 2.
FIG. 19 illustrates a basis for determining the successive utilization tendency by sorting only by the first day of the year (January 1) based on FIG. 2.

### MODE FOR CARRYING OUT THE INVENTION

In the following, the present invention will be described with reference to the drawings.

### (First embodiment)

A charger management technology according to a first embodiment of the present invention will be described with reference to the drawings. According to the present embodiment, targeting a user who is looking for, while charging, a charger that the user can utilize for the next time, successive utilization tendency regarding the charging spot being utilized is distributed to a user terminal while the charger is being utilized.

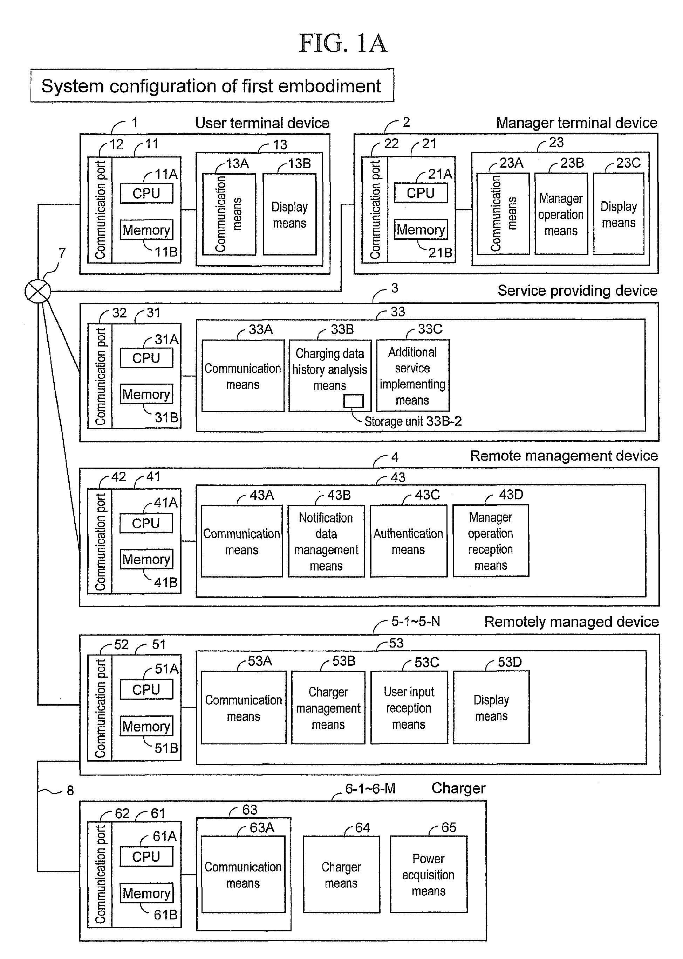

FIG. 1A is a functional block diagram of a configuration example of a charger management system according to the first embodiment of the present invention. As shown in FIG. 1A, in the charger management system, a user terminal device 1 possessed and used by a user is connected to a manager terminal device 2, a service providing device 3, a remote management device 4, a remotely managed device 5, and a charger 6 via a network 7, such as the Internet.

The user terminal device 1 includes a terminal device 11 with a CPU 11A and a memory 11B, a communication port 12, and an external storage device 13. The external storage device 13 includes a communication means 13A for receiving information from the service providing device 3 via the Internet 7, and a display means 13B for displaying received content. The user terminal device 1 is a charger user's cellular phone, for example. The communication means 13A may include a mail function, and the display means 13B may include the display of the cellular phone.

The manager terminal device 2 includes a terminal device 21 with a CPU 21 A and a memory 21B, a communication port 22, and an external storage device 23. The external storage device 23 includes a communication means 23A for communicating with the service providing device 3 and the remote management device 4 via the Internet 7, a manager operation means 23B, and a display means 23C.

The service providing device 3 includes a terminal device 31 with CPU 31 A and a memory 31B, a communication port 32, and an external storage device 33. The external storage device 33 includes a communication means 33A for communicating with the user terminal device 1, the manager terminal device 2, and the remote management device 4 via the Internet 7; a charging data history analysis means 33B for analyzing charging data collected during a certain period; and an additional service implementing means 33C for implementing information distribution additionally to the charging service. The charging data history analysis means 33B may be provided with a storage unit 33B-2. The charging data history analysis means 33B enables the service providing device 3 to function as a charger management device.

The remote management device 4 includes a terminal device 41 with a CPU 41A and a memory 41B, a communication port 42, and an external storage device 43. The external storage device 43 includes a communication means 43A for communicating with the manager terminal device, the service providing device, and the remotely managed device; a notification data management means 43B for storing charging data sent from the remotely managed device during charging in the storage device and transferring the data to the service providing device; an authentication means 43C for performing charger user authentication in response to a request from the remotely managed device; and a manager operation reception means 43D for receiving an operation from the manager terminal.

The remotely managed device 5 includes a terminal device 51 with a CPU 51 A and a memory 51B, a communication port 52, and an external storage device 53. The external storage device 53 includes a communication means 53A for communicating with the remote management device 4 and the charger 6, a charger management means 53B for managing the charger 6, a user input reception means 53C for acquiring a user identification number necessary for authentication from the user, and a display means 53D for notifying the user of a charger operating procedure or state. The remotely managed device 5 includes a plurality of remotely managed devices 5-1 to 5-N (N is an integer of 1 or more). The charger 6 also includes chargers 6-1 to 6-M.

The charger 6 includes a terminal device 61 with a CPU 61A and a memory 61B, a communication port 62, an external storage device 63 storing a communication means for communicating with the remotely managed device via the network 8, a charging means 64 for charging, and a power acquisition means 65 for acquiring power for charging from a power company and the like. The charging means 64 includes cables and connectors for connecting the charger and the electric automobile.

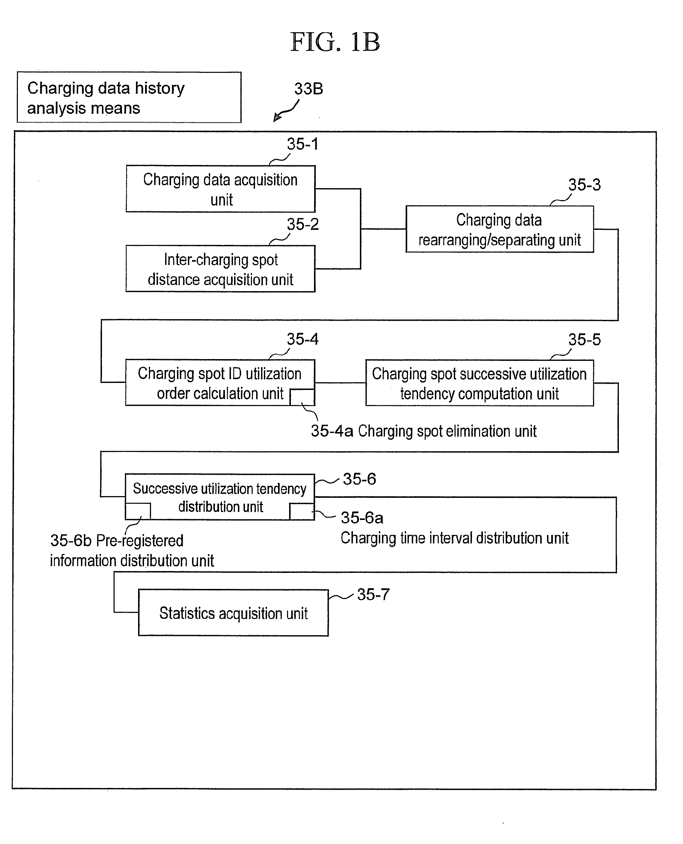

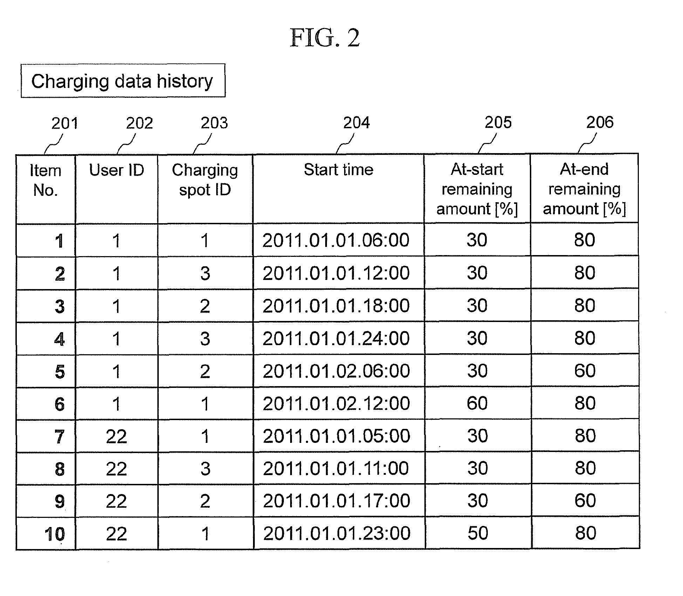

FIG. 1B is a functional block diagram of a configuration example of the charging data history analysis means 33B. As shown in FIG. 1B, the charging data history analysis means 33B includes a charging data acquisition unit 35-1 for acquiring charging data; an inter-charging spot distance acquisition unit 35-2 for acquiring the distance between the charging spots; a charging data rearranging/separating unit 35-3 for separating data by rearranging the charging data and rearranging each rearranged item, for example; a charging spot ID utilization order calculation unit 35-4 for calculating in what order the charging spots are being utilized on an item by item basis; a charging spot successive utilization tendency computation unit 35-5 for computing in what order the charging spots are being successively used, on the basis of the result of calculation by the charging spot ID utilization order calculation unit 35-4; a successive utilization tendency distribution unit 35-6 for distributing a computation result; and a statistics acquisition unit 35-7 for acquiring statistics in a case where charging was performed by a charger not being managed, mainly at a halfway point. The charging spot ID utilization order calculation unit 35-4 includes a charging spot elimination unit 35-4a. The successive utilization tendency distribution unit 35-6 includes a charging time interval distribution unit 35-6a and a pre-registered information distribution unit 35-6b. The rearranging and separating of the charging data generally refers to a process of sorting the charging data by at least one of items of a charger user identification number, a charging spot ID identifying the charger installed location, a charging start time, a battery remaining amount at start of charging, and a battery remaining amount at end of charging. FIG. 2 illustrates an example of the charging data history collected in a certain period, including an item number 201, a user name (ID) 202, a charging spot ID 203, a charging start time 204, a remaining amount at start of charging 205, and a remaining amount at end of charging 206. The user ID is added by the remotely managed device 5, and the others are generated by the charger 6. While not illustrated, the charger 6 also generates a charger ID identifying the charger 6, and a charger state indicating the charge state.

The figure shows which user started charging at what charging spot at what time, and what the remaining amounts of the battery were at the start and end of charging. Thus, by performing sorting by desired items, such as by the user, the charging spot, or the start time period, for example, only necessary data can be extracted, or a recommended charging spot based on the items of interest can be proposed, for example.

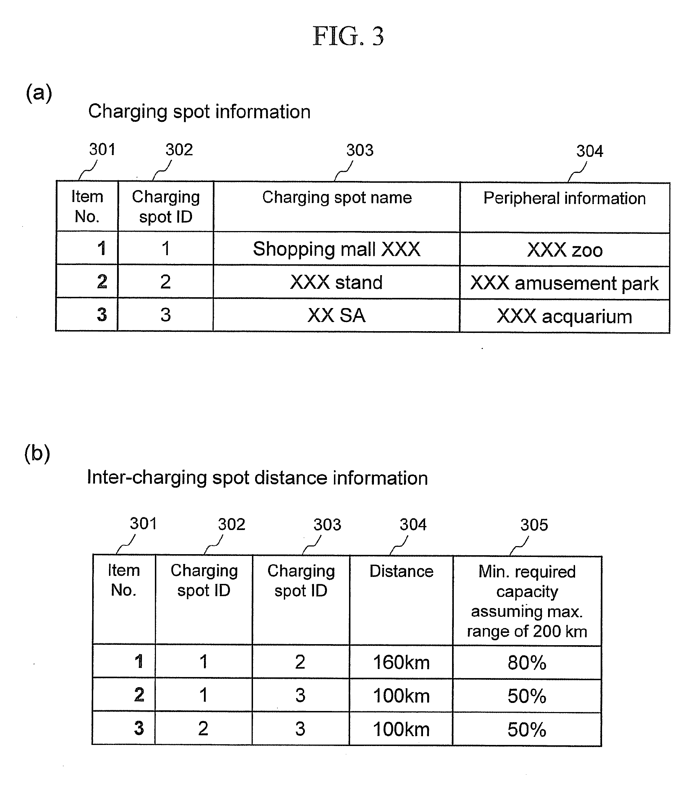

FIG. 3(a) illustrates an example of charging spot information that the storage unit 33B-2 of the charging data history analysis means 33B holds inside. The information has an item number 301, a charging spot ID 302, a charging spot name 303, and peripheral information of the charging spot (related information) 304.

FIG. 3(b) shows an example of inter-charging spot distance information that the storage unit 33B-2 of the charging data history analysis means 33B holds inside. The information has an item number 301, a first charging spot ID 302, a second charging spot ID 303, a distance 304 between the first charging spot and the second charging spot, and a minimum required capacity of the battery on the assumption that the maximum range of the electric automobile is 200 km.

The table of FIG. 3(b) holding the information 301 to 305 may be divided into the following two tables such that the same record as 305 of FIG. 3(b) can be acquired by using information additionally included in the charging data history (FIG. 2) for identifying the type of EV, such as a battery total capacity, as a key. Namely, the table may be divided into an inter-charging spot actual distance table from 301 to 304 and an EV maximum range table storing new information for identifying the type of EV, such as the battery total capacity, and an EV maximum range describing the maximum range of the EV. In this case, the premise is that the charging data history (FIG. 2) has the information, such as a battery total capacity column.

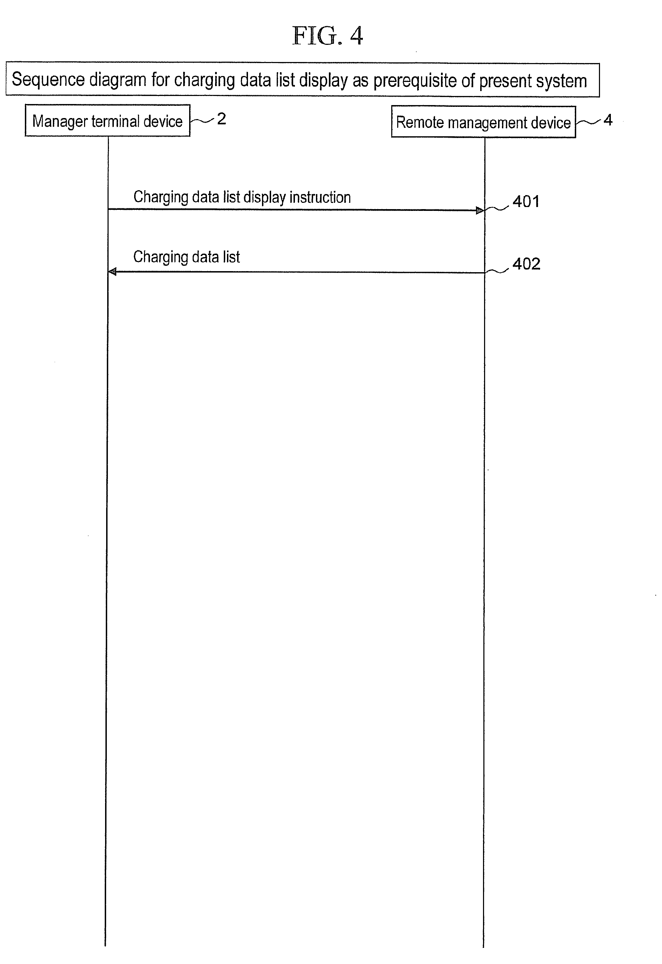

FIG. 4 is a sequence diagram for charging data list display in the charger management system according to the present embodiment. The manager terminal device 2 sends an instruction for charging data list display to the remote management device 4 (step 401). The remote management device 4 returns a charging data list to the manager terminal device 2 (step 402).

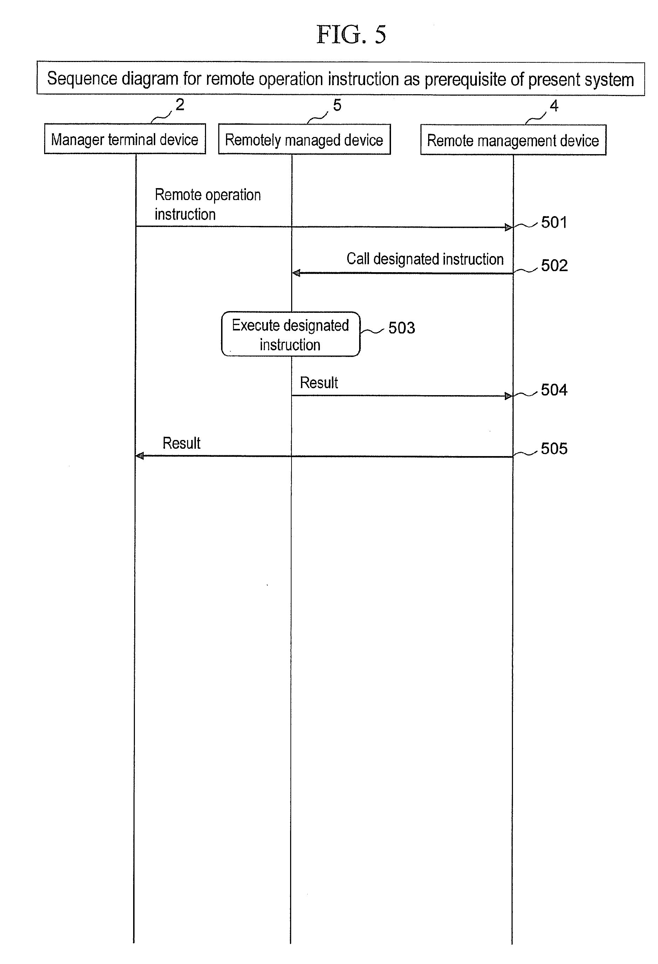

FIG. 5 is a sequence diagram for remote operation instruction in the charger management system according to the present embodiment. The remote operation instruction is an instruction for starting or stopping the charger 6, for example.

The manager terminal device 2 sends a remote operation instruction to the remote management device 4, designating an operation content (step 501). The remote management device 4 sends a demand for calling the designated instruction to the remotely managed device 5 (step 502). The remotely managed device 5 executes the designated instruction (step 503). For example, when the designated instruction is for stopping the charger, the remotely managed device 5 also communicates with the charger 6. When the designated instruction is a demand for immediate notification of charging data, the remotely managed device 5 notifies the remote management device 4 of charging data such as the state of the charger 6 or the user ID.

The result of calling of the instruction, either a success or a failure, is returned to the remote management device (step 504).

The remote management device 4 causes the result of calling to be displayed on the manager terminal device 2, such as on a WEB browser (step 505).

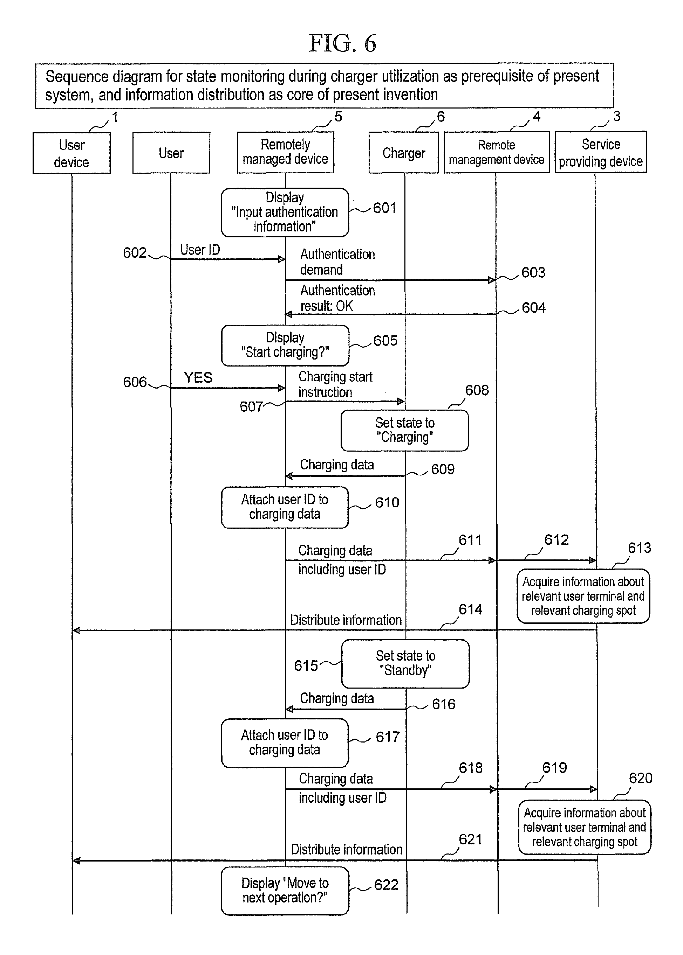

FIG. 6 is a sequence diagram for state monitoring at the time of charger utilization as a prerequisite of the charger management system according to the present embodiment, and for information distribution forming the core of the present invention. While in the following, information based on charging content will be described as being distributed at the start and end of charging, the time may be either the start or the end. An assumed state is such that the charging means 64 of the charger 6 is connected to a device to be charged, such as an electric automobile. The charger 6 is managed by the charger management means 53B and controlled to send charging data pertaining to the charger 6 to the remotely managed device 5 when the charger state is changed or at regular time intervals. The charger state is saved in the external storage device 63 of the charger 6 and in a region in the external storage device 53 that the charger management means 53B manages.

First, an authentication information input request is displayed on the display screen of the remotely managed device 5 (step 601). The user hands his or her user ID to the user input reception means. For example, the user ID is sent by holding a contactless ID card distributed to pre-registered users over the user input reception means 53C of the remotely managed device 5 (step 602). The remotely managed device 5 then sends an authentication demand to the remote management device 4 (step 603). The remote management device 4 returns a result to the remotely managed device 5 (step 604). Then, a message "Start charging?" is displayed on the display screen of the remotely managed device 5 (step 605). If the user replies "YES" (step 606), a charging start instruction is sent to the charger (step 607).

If the user replies "NO", the process of the remotely managed device 5 returns to the initial step 601.

If the reply is "YES", the charger 6 sets its state to "charging" (step 608) and, because the charger 6 is controlled by the charger management means to send charging data to the remotely managed device 5 upon state change or periodically, as described above, the charger 6 sends the charging data (step 609). The remotely managed device 5 attaches the user ID (step 610) and sends the data to the remote management device 4 (step 611). The remote management device 4 saves the data in the remote management device 4 and transfers it to the service providing device 3 (step 612). The service providing device 3 executes the relevant instruction. In the present example, the address of the user registered in the external storage device 33 of the service providing device 3 at the time of prior registration, and the next charging spot information in accordance with the charging data are acquired (step 613) and distributed to the user terminal device 1 by mail, for example (step 614).

When charging is completed, the charger 6 sets its state to standby state (step 615), performs the same process as from step 609 to step 614, and then a message "Move to next process?" is displayed (step 622). If this is followed by the input of "OK", the process returns to step 601. The standby state continues until there is an input.

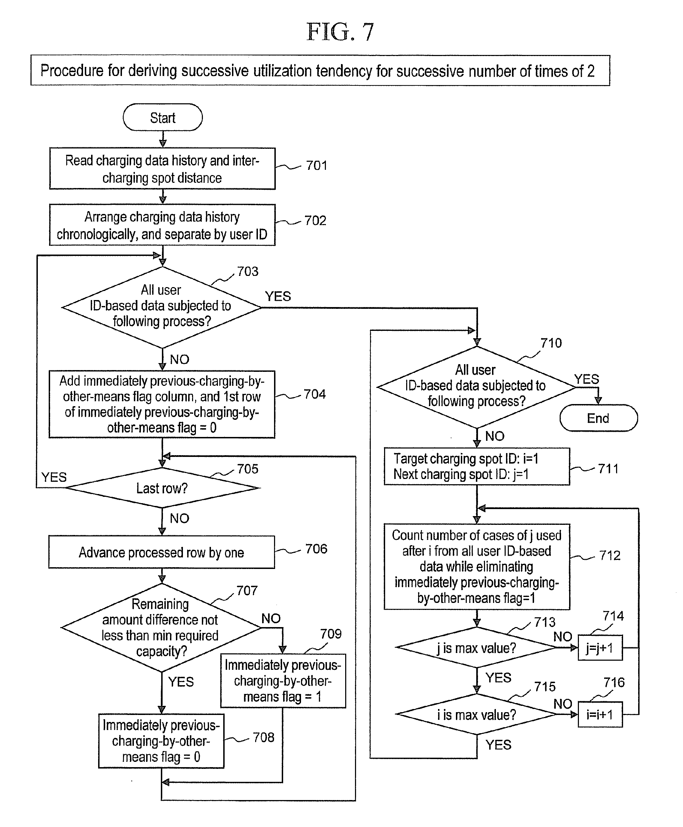

FIG. 7 is a sequence diagram of a successive utilization tendency deriving procedure performed by the charging data history analysis means 33B periodically, for example. The procedure will be described with reference to FIG. 1B.

First, the charging data acquisition unit 35-1 and the inter-charging spot distance acquisition unit 35-2 read the charging data history (FIG. 2) and the inter-charging spot distance (FIG. 3(b)), respectively (step 701). Then, the charging data rearranging/separating unit 35-3 arranges the charging data history in chronological order and separates it according to the user ID (step 702). It is determined whether the following process has been performed with regard to all of the user ID-based data (step 703). If "YES", the procedure advances to step 710. If "NO", an immediately previous-charging-by-other-means flag column is added to the user ID-based data that has not been processed, and the immediately previous-charging-by-other-means flag in the first row is set to zero (step 704). It is determined whether the row is the final row (step 705), and if "YES", the process returns to step 703. If "NO", the row to be processed is advanced to the next row (step 706), and it is determined whether the remaining amount difference is not less than a minimum required capacity (step 707). If "YES", the immediately previous-charging-by-other-means flag is set to zero (step 708). If "NO", the immediately previous-charging-by-other-means flag is set to 1 and the procedure returns to step 705. Allocating the immediately previous-charging-by-other-means flag and determining the necessity for counting the number of cases based on the immediately previous-charging-by-other-means flag as will be described below correspond to the charging spot elimination unit 35-4a.

In step 710, it is determined whether the following process has been performed for all of the user ID-based data. If "YES", the procedure ends; if "NO", the target charging spot ID is set such that i = 1 for the user ID-based data that has not been processed, and the next charging spot ID is set such that j = 1 (step 711). Then, of the data in all of the user ID-based data for which the immediately previous-charging-by-other-means flag is not 1, the number of cases that j was used after i is counted (step 712). It is determined whether j is a maximum value (step 713) and if not, j is incremented (step 714) and the procedure returns to step 712. It is determined whether i is a maximum value (step 715) and if not, i is incremented (step 716) and the procedure returns to step 712.

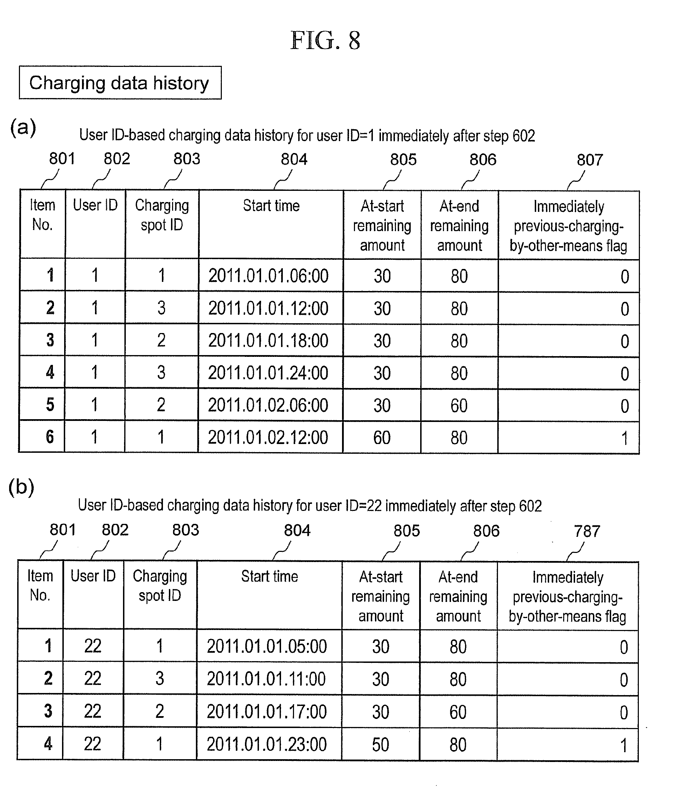

FIG. 8(a) illustrates the user ID-based charging data history for the user ID = 1 immediately after step 602. The immediately previous-charging-by-other-means flag is 1 only for the item number 6. This is because the difference of 0% between the at-end remaining amount for the item number 5 and the at-start remaining amount for the item number 6 contradicts the fact that at least 80% of capacity is required between the charging spot 1 for the item number 6 and the charging spot 2 for the item number 5 according to FIG. 3(b). Because this is presumably due to charging at a halfway point by a charger not being managed, the immediately previous-charging-by-other-means flag is raised for exclusion from the subsequent derivation of successive utilization tendency. The immediately previous-charging-by-other-means flag for the other items, such as the item number 2, is 0 because the difference of 50% between the at-end remaining amount for the item number 1 and the at-start remaining amount for the item number 2 does not contradict the fact that at least 50% of capacity is required between the charging spot 3 for the item number 2 and the charging spot 1 for the item number 1 according to FIG. 3(b).

FIG. 8(b) illustrates the user ID-based charging data history for the user ID = 22 immediately after step 602. The immediately previous-charging-by-other-means flag is 1 only for the item number 4. This is because the difference of 10 between the at-end remaining amount for the item number 3 and the start-time remaining amount for the item number 4 contradicts the fact that at least 80% of capacity is required between the charging spot 1 for the item number 6 and the charging spot 2 for the item number 5 according to FIG. 3(b). Because this is presumably due to charging at a halfway point by a charger not being managed, the immediately previous-charging-by-other-means flag is raised for exclusion from the subsequent derivation of successive utilization tendency. The other immediately previous-charging-by-other-means flags are 0 because it cannot be said that there is contradiction, as described with reference to FIG. 8(a).

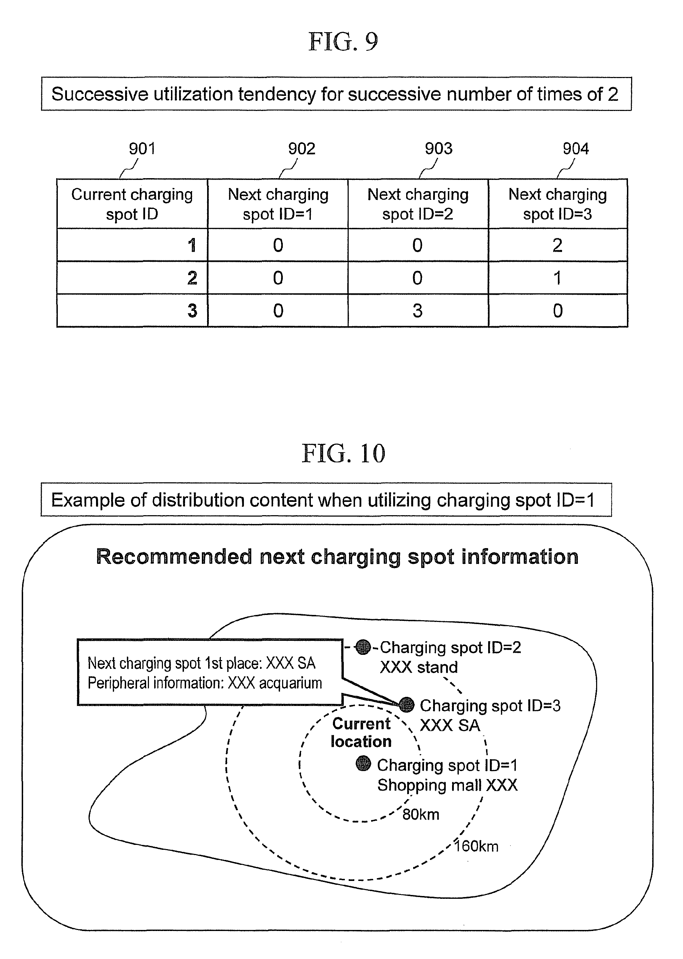

FIG. 9 illustrates an example of the result of computation of the successive utilization tendency for the successive number of times of two which was derived by the charging spot successive utilization tendency computation unit 35-5 of FIG. 1B from the charging data history of FIG. 2. The example has a current charging spot ID 901 taking values from 1 to 3, a next charging spot ID = 1 (902), a next charging spot ID = 2 (903), and a next charging spot ID = 3 (904). The numbers indicate the number of cases. The successive utilization tendency provides the computation result that when the charging spot is "1", the next ID is "#", when the current ID is "2", the next ID is "3", and when the current ID is "3", the next ID is "2".

FIG. 10 illustrates an example of a distribution content by the charging spot successive utilization tendency distribution unit 35-5 shown in FIG. 1B at the time of utilization of the charging spot ID = 1. Specifically, the example is that of a screen created by drawing the data for the charging spot ID = 1, i.e., the tendency that the charging spot ID = 3 is most likely utilized the next time, from FIG. 9 that has already been prepared, on the basis of the notification of the charging spot ID in step 612 or step 619 and by referring to the information of FIG. 3(a).

Thus, when the current charging spot is the charging spot ID = 1, the charging spot ID = 3 is recommended for the next time rather than the charging spot ID = 22.

Further, as indicated by 620 and 621 of FIG. 6, the pre-registered information distribution unit 35-6b may acquire information about the relevant user terminal and the relevant charging spot, and distribute the information. In this way, as shown in FIG. 10, the next charging spot and peripheral information and the like (such as coupon information for the charging spot) can be distributed.

As described above, information which is useful when looking for, while charging, a charger that can be used next time, or a charger that can be expected to be not crowded, can be obtained. Thus, user convenience can be increased and utilization of chargers being managed can be promoted.

Regarding the first embodiment, the service providing device and the remote management device may be one and the same.

### (Second embodiment)

According to a second embodiment, targeting a user looking for a charger that can be expected to be not crowded, for example, the successive utilization tendency of all of the charging spots is distributed at an arbitrary timing.

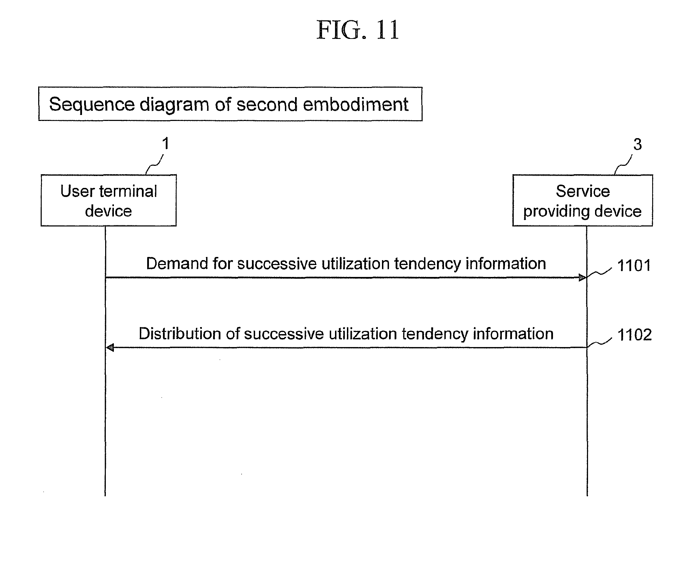

FIG. 11 is a sequence diagram for the second embodiment. The second embodiment is similar to the first embodiment in system configuration. The user terminal device 1 demands the successive utilization tendency information from the service providing device 3 at an arbitrary timing (step 1101). The service providing device 3 distributes the successive utilization tendency information (step 1102). Instead of the user terminal device 1 making the demand, the information may be distributed from the service providing device 3 to the user terminal device 1 in a push system.

In a variation of the second embodiment, in step 1102 of FIG. 11, the charging time interval distribution unit 35-6a of FIG. 1B may distribute not just the successive utilization tendency but also the charging time interval measured in a certain period at each charging spot. The charging time interval is an average interval of the start times 804 for each charging spot ID 803 as shown in FIG. 8(b) that has been calculated from the charging data history obtained in a certain period. A short charging time interval means the possible development of congestion caused by waiting for charging. Instead of the charging time interval, the number of charges accomplished in a certain period may be used. When stoppage is caused by maintenance or the like, that information may be distributed.

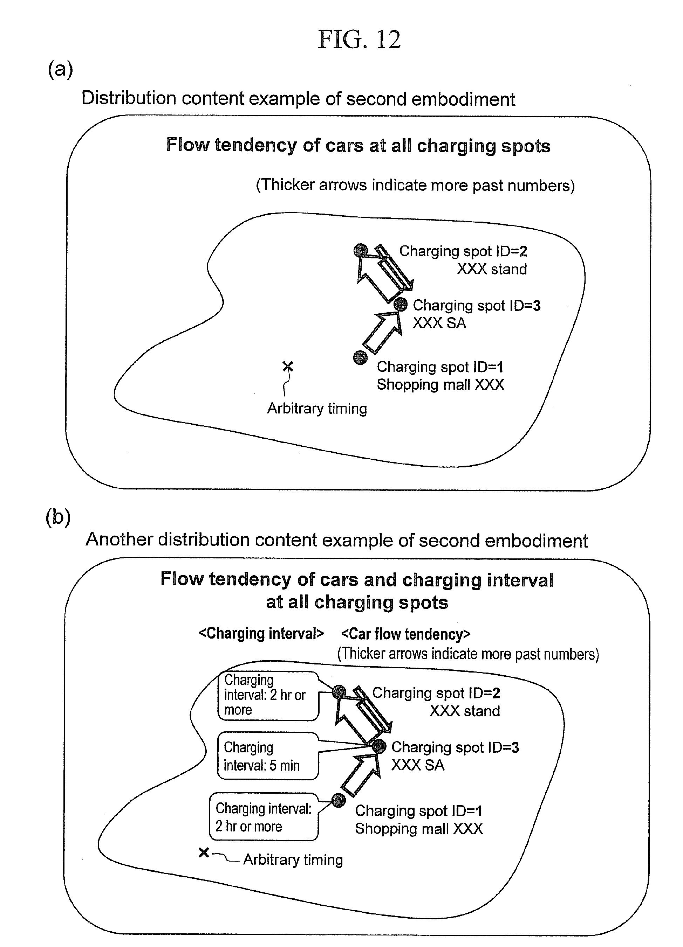

FIG. 12(a) illustrates a distribution content example in the system according to the present embodiment. The example illustrates the successive utilization tendency between all of the charging spots based on the successive utilization tendency for the successive number of times of two that has already been prepared, as shown in FIG. 9. In the illustrated example, thicker arrows displayed indicate greater numbers accomplished. Thus, from this display, the user can accurately determine which charging spot they should head to.

FIG. 12(b) illustrates a distribution content example according to the variation of the second embodiment. In addition to the successive utilization tendency between all of the charging spots, information about the charging time interval at each charging spot is also distributed. When the charging interval is five minutes, the charging spot is mostly crowded and charging is not available, so that going to the charging spot ID = 2 by passing the charging spot ID = 3 is recommended.

With regard to the variation of the second embodiment, when the development of a sign of congestion due to a failure or a decrease in the charging interval at a charging spot is noted suddenly, how much influence this may have on which of the other charging spots may be analyzed on the basis of the successive utilization tendency, and the resultant information may be distributed to the user at an arbitrary timing. In this way, a recommended spot can be suggested in real time in accordance with the utilization status of the charging spots.

### (Third embodiment)

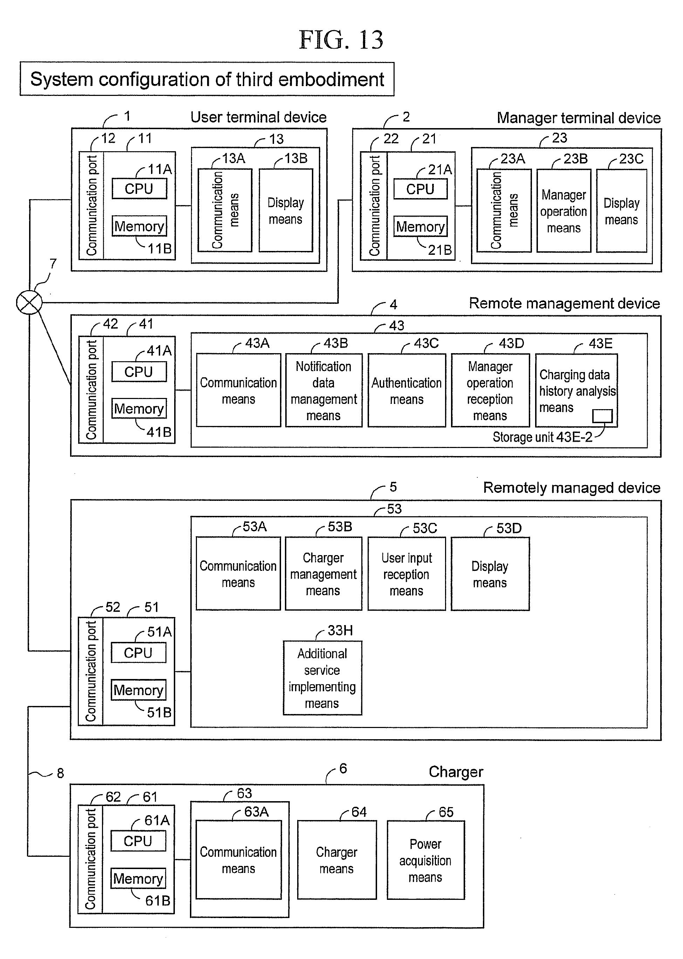

Next, a third embodiment of the present invention will be described. FIG. 13 illustrates a configuration example of the charger management system according to the third embodiment.

Compared to the system configuration of the first embodiment, the charging data history analysis means 33B that has been in the service providing device 3 is provided in the remote management device 4, and the additional service implementing means 33C that has also been in the service providing device 3 is provided in the remotely managed device 5. The service providing device 3 is not provided. In other respects, the present embodiment is similar to the other embodiments. The additional service implementing means 33H acquires, beforehand and at regular time intervals, for example, the analysis result data obtained by the charging data history analysis means 43E.

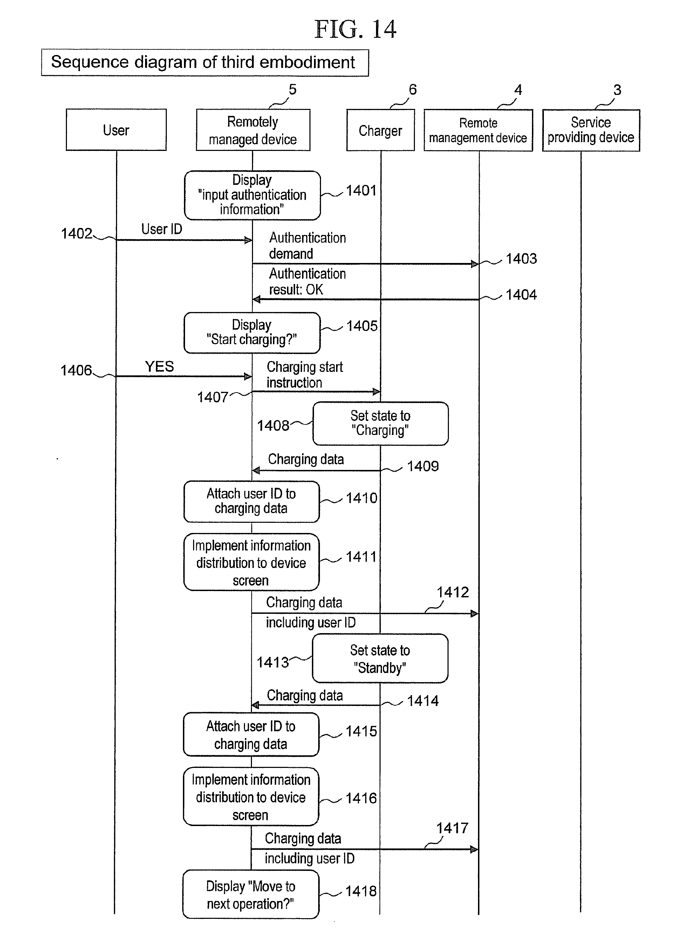

FIG. 14 is a sequence diagram for the charger management system according to the third embodiment, which is substantially the same as FIG. 6. Differences are that in step 1411 instead of steps 613 and 614, and similarly in step 1416 instead of steps 620 and 621, the additional service providing means 33H in the device implements the information distribution to the device. In this way, the system configuration can be advantageously simplified.

### (Fourth embodiment)

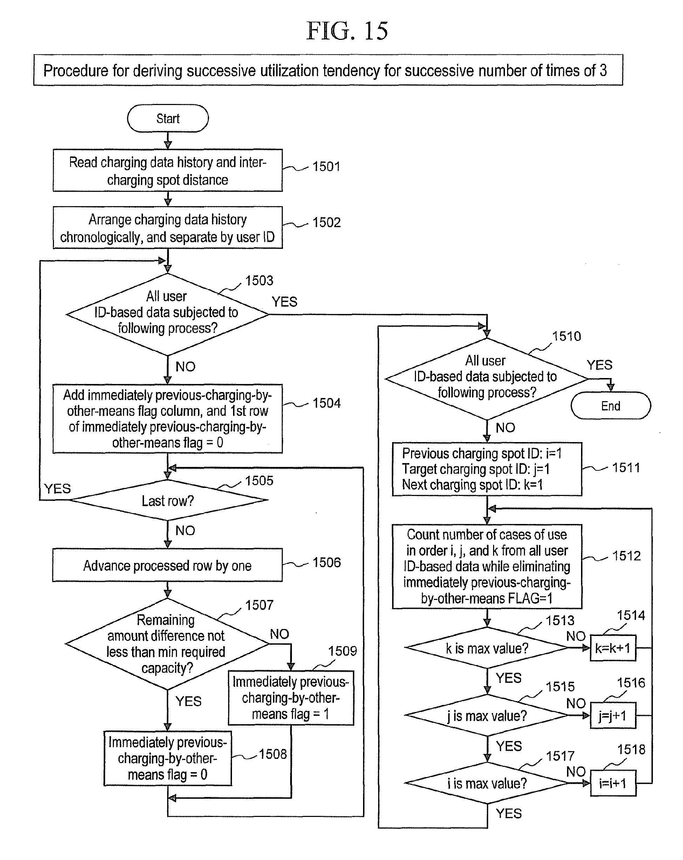

FIG. 15 illustrates a successive utilization tendency deriving procedure for the successive utilization of three times according to a fourth embodiment of the present invention. FIG. 15 is substantially the same as FIG. 7 and differs in that a three successive utilization tendency is derived from 1510 to 1518 instead of 710 to 716.

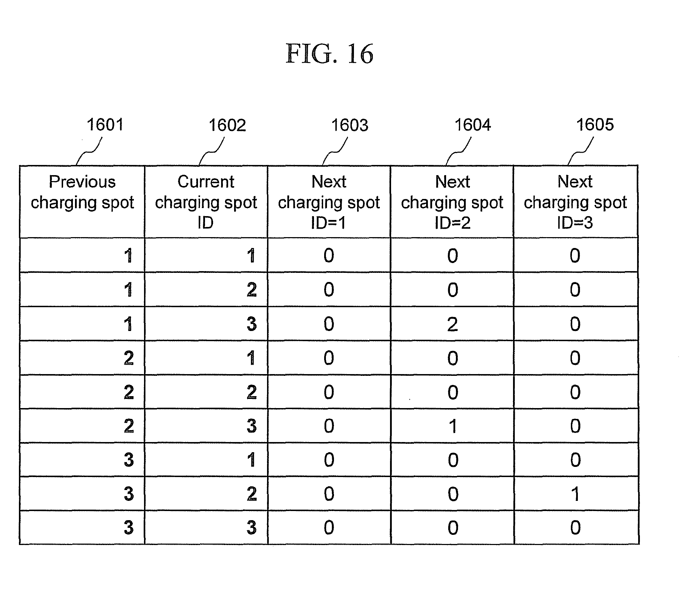

FIG. 16 illustrates the successive utilization tendency for the successive number of times of three derived from the charging data history of FIG. 2. The illustrated example has a previous charging spot ID 1601 taking values of 1 to 3, a current charging spot ID 1602 taking values of 1 to 3, a next charging spot ID = 1 (1603), a next charging spot ID = 2 (1604), and a next charging spot ID =3 (1605). The numbers indicate the number of cases. According to this method, three charging spots can be cited as candidates for the next charging spots following the current charging spot. Similarly, more than three candidates may be recommended.

### (Fifth embodiment)

According to a fifth embodiment of the present invention, compared with the first embodiment, the distribution destination is changed from the user terminal to the remotely managed device.

The third embodiment may be configured such that the external storage device 53 of the remotely managed device 5 further includes an OSGi framework according to Non-patent Document 2 (http://www.osgi.org), where the additional service implementing means 33H is operated as a bundle on the framework. Namely, the configuration may be modularized so that the addition of a function can be implemented without seeking a system.

In the following, application examples and modifications of the embodiments will be described.

1) In each embodiment, instead of performing the information distribution by electronic mail, each of the service providing device and the user terminal device may be provided with an application for performing communication with each other via a communication means so that information can be distributed from the service providing device to the user terminal device. For example, the information distribution 614 and 621 in FIG. 6 is performed by an application for mutual communication via a communication means, such as general information communications, instead of by electronic mail, so that information notification can be made without requiring actions such as opening a mail with an attachment.

### 2) Application example of computation of successive utilization tendency

With reference to FIG. 13, an application example of successive utilization tendency will be described with reference to FIGS. 2 and 13. In the example of FIG. 8, in FIG. 8(a), sorting is performed on the user ID item basis, and the successive utilization tendency of an automobile and the like mounting the battery identified by the user ID = 1 is determined. In FIG. 8(b), sorting is performed on the user ID item basis, and the successive utilization tendency of an automobile and the like mounting the battery identified by the user ID = 22 is determined.

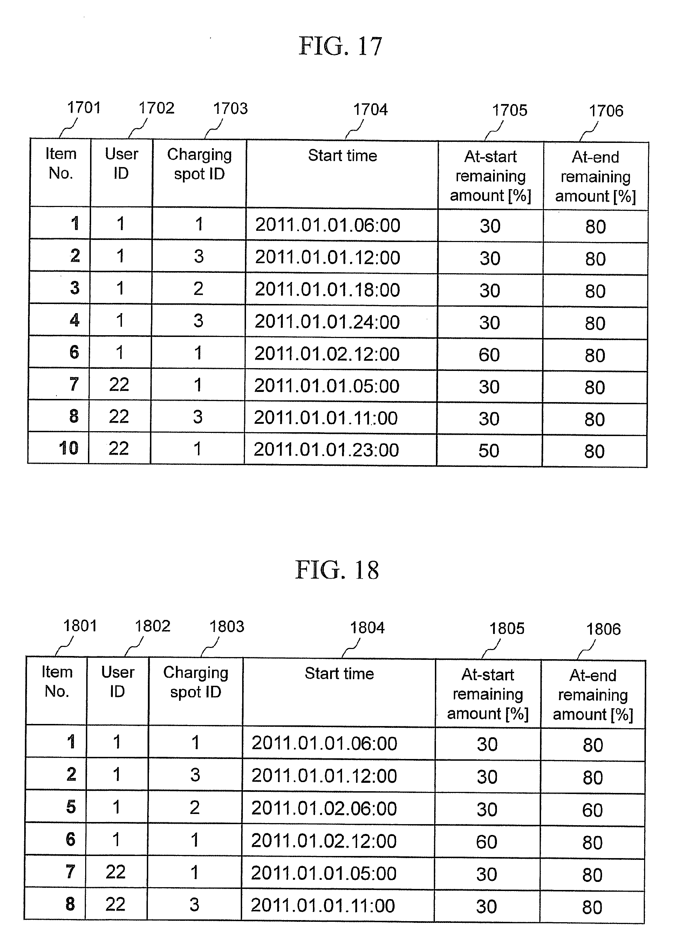

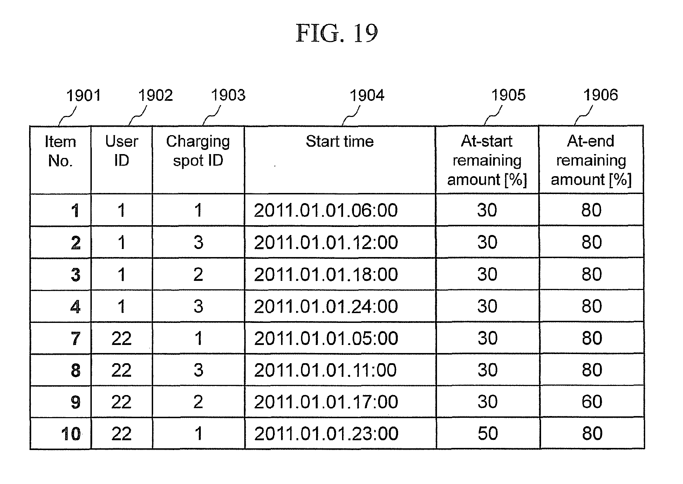

FIGS. 17 to 19 illustrate examples in which the successive utilization tendency of an automobile and the like is determined by sorting by items other than the user ID, as described below. FIG. 17 illustrates a basis for determining the successive utilization tendency by sorting FIG. 2 only by the at-end remaining amount of 80 (5). FIG. 18 illustrates a basis for determining the successive utilization tendency by sorting FIG. 2 by only the charging start time of morning. FIG. 19 illustrates a basis for determining the successive utilization tendency by sorting FIG. 2 by only the first day of the year (January 1). Regarding these items, a command as to by what item sorting should be performed may be transmitted to the service providing device on the basis of a user input from the user terminal, or the command may be sent via the manager terminal.

2-1) As shown in FIG. 17, when computing the successive utilization tendency, classifying FIG. 2 on the basis of the distance that can be traveled by depending on the at-end battery remaining amount, such as the remaining amount of more or less than 50%, without feeding power, may include a procedure for classifying by the at-end battery remaining amount. Of the resultant successive utilization tendency on the at-end remaining amount basis, in the case of distribution at the time of charging, as in the first embodiment, a successive utilization tendency suitable for classifying by the relevant at-end remaining amount may be distributed. Namely, the successive utilization tendency may be determined on the basis of the distance that can be travelled without feeding power, and a recommended charging spot may be proposed.

2-2) As shown in FIG. 18, determining the successive utilization tendency may include a procedure for classifying by the charging start time band, such as morning or afternoon (see the time bands in FIG. 8). This is because it is likely that the charging spot to be recommended may be changed depending on the time band, as the direction having a congestion, i.e., upbound or downbound, generally varies between morning and afternoon.

Of the resultant successive utilization tendency on the charging start time band basis, in the case of distribution at the time of charging as in the first embodiment, a successive utilization tendency suitable for classifying by the relevant charging start time band may be distributed.

2-3) As shown in FIG. 19, determining the successive utilization tendency may include a procedure for classifying by the period of the charging start day in consideration of special periods, such as the first day of the year, the summer vacation period, or the GW period. On the first day of the year, the fact that roads to shrines are congested may be taken into consideration. While not illustrated in the drawings, during the GW period, for example, the first half may see congestion in downbound roads while the upbound roads may be more congested in the latter half. Of the resultant successive utilization tendency on the charging start time period basis, in the case of distribution at the time of charging as according to the first embodiment, a successive utilization tendency for the classification by the relevant charging start time period may be distributed.

Of course, sorting by at least one or a plurality of items may be performed. The items may include at least one of the items of the charging data, i.e., the charger user identification number, the charging spot ID identifying the charger installed location, the charging start time, the battery remaining amount at start of charging, and the battery remaining amount at end of charging.

The sort items herein may be understood as search conditions in a general sense.

### 3) Terminal device application example

The user terminal device may include a car navigation device installed on an automobile and provided with data receiving function. The user terminal device may include a portable terminal with car navigation function.

The foregoing embodiments are not limited to the configurations and the like illustrated in the attached drawings and may be modified as needed within a scope such that the effects of the present invention can be obtained. The embodiments may also be implemented with other modifications made without departing from the scope of the object of the present invention.

The automobile may include a hybrid vehicle. In this case, in consideration of average fuel economy by gasoline alone and the remaining amount of gasoline, similar calculations may be performed on the assumption that all of the gasoline has been consumed.

### 4) Application example for distributing non-managed charging per se

The foregoing embodiments have been described with the intention of more accurately determining the successive utilization tendency by eliminating charging records arising from charging at a halfway point by a charger not being managed. However, the very information about the records arising from the charging at a halfway point by the charger not being managed may be supplied to the manager so that the manager can utilize the information for studying additional spots for installing chargers.

For example, in a specific process procedure, it is determined in the statistics acquisition unit 35-7 of FIG. 1B through the same process as in steps 703 to 709 of FIG. 7 whether charging by a charger not being managed has occurred at a halfway point. Then, records with the immediately previous-charging-by-other-means flag = 1 and their immediately preceding records are extracted and classified by all of the combinations of charging spot sections connecting two charging spots, for example, and statistics data such as the number of cases is acquired and transmitted via the communication means 33A to the manager terminal device.

### 5) Modification

In the foregoing embodiments, information solely based on one's own (one's vehicle) history may be distributed.

### INDUSTRIAL APPLICABILITY

The present invention may be utilized for a charger management device.

### REFERENCE SIGNS LIST

- 1: User terminal device
- 11A, 21A, 31A, 41A, 51A, 61A: CPU
- 11B, 21B, 31B, 41B, 51B, 61B: Memory
- 13, 23, 33, 43, 53, 63: External storage device
- 33B: Storage unit
- 2: Manager terminal device
- 3: Service providing device
- 4: Remote management device
- 5-1 to 5-N: Remotely managed device
- 6-1 to 6-M: Charger
- 7: Internet
- 8: Network
- 13A, 23A, 33A, 43A, 53A, 63A: Communication means
- 13B, 23C, 53D: Display means
- 23B: Manager operation means
- 33B: Charging data history analysis means
- 33C: Additional service implementing means
- 35-1: Charging data acquisition unit
- 35-2: Inter-charging spot distance acquisition unit
- 35-3: Charging data rearranging/separating unit
- 35-4: Charging spot ID utilization order calculation unit
- 35-4a: Charging spot elimination unit
- 35-5: Charging spot successive utilization tendency computation unit
- 35-6: Successive utilization tendency distribution unit
- 35-6a: Charging time interval distribution unit
- 35-6b: Pre-registered information distribution unit
- 35-7: Statistics acquisition unit
- 43B: Notification data management means
- 43C: Authentication means
- 43D: Manager operation reception means
- 53B: Charger management means
- 53C: User input reception means
- 64: Charging means
- 65: Power acquisition means
All publications, patents, and patent applications mentioned in this specification are incorporated by reference herein in their entirety.

## Claims

1. A charger management device for performing state monitoring and user authentication for a charger for a vehicle equipped with a secondary battery (chargeable battery), comprising:
a charging data acquisition unit that acquires at least one of items of a charger user identification number, a charging spot ID identifying a charger installed location, a charging start time, a battery remaining amount at start of charging, and a battery remaining amount at end of charging;
a charging data rearranging/separating unit that rearranges and separates (sorts) the charging data by the at least one of the items;
a charging spot ID utilization order calculation unit that calculates in what order charging spots are being utilized on an item by item basis;
a charging spot successive utilization tendency computation unit that computes, on the basis of the result of calculation by the charging spot ID utilization order calculation unit, in what order the charging spots are being used successively; and
a successive utilization tendency distribution unit that distributes a computation result to a user terminal held by a user.

2. The charger management device according to claim 1, wherein:
the charging data rearranging/separating unit separates the charging data by the user identification number and rearranges the data by the charging start time at predetermined regular time intervals;
the charging spot ID utilization order calculation unit calculates in what order the charging spot IDs are being utilized on the basis of all of the sorted charging data; and
the charging spot successive utilization tendency computation unit derives a charging spot successive utilization tendency indicating at which location the next charging is often performed after charging is performed at one location.

3. The charger management device according to claim 2, further comprising:
an inter-charging spot distance acquisition unit that acquires the distance between the charging spots; and
a charging spot elimination unit that, when the charging spot successive utilization tendency is derived, compares a first capacity value which is the difference between an at-end battery remaining amount at the time of previous charging and an at-start battery remaining amount at the time of ongoing current charging, with a second capacity value which is a minimum required battery capacity between the charging spots that is calculated from a maximum range that can be travelled based on the charger and the inter-charging spot distance, excluding from the charging data when the second capacity value is greater than the first capacity value.

4. The charger management device according to any one of claims 1 to 3, wherein the successive utilization tendency distribution unit distributes a successive utilization tendency with regard to all of the charging spots being managed to the user terminal regardless of whether charging is currently ongoing or not.

5. The charger management device according to any one of claims 1 to 3, wherein the successive utilization tendency distribution unit distributes a charging time interval at each charging spot to the user terminal simultaneously with a successive utilization tendency with regard to all of the charging spots being managed, regardless of whether charging is currently ongoing or not.

6. The charger management device according to any one of claims 1 to 5, wherein the successive utilization tendency distribution unit performs distribution to a remotely managed device that remotely manages the charger, instead of to the user terminal.

7. The charger management device according to any one of claims 1 to 6, further comprising an additional service implementing means that performs information distribution additionally to charging service.

8. The charger management device according to claim 7, wherein the additional service implementing means is implemented as bundle software on an OSGi framework.

9. The charger management device according to claim 3, comprising:
a statistics acquisition means that acquires statistics data for the charging data of which the second capacity value is greater than the first capacity value; and
a communication means that transmits the statistics data to a manager terminal device.

10. A charger management method for performing state monitoring and user authentication for a charger for a vehicle equipped with a secondary battery (chargeable battery), the method comprising:
a charging data acquisition step of acquiring charging data including at least one of items of a charger user identification number, a charging spot ID identifying a charger installed location, a charging start time, a battery remaining amount at start of charging, and a battery remaining amount at end of charging;
a charging data rearranging/separating step of rearranging and separating (sorting) the charging data by the at least one of the items;
a charging spot ID utilization order calculation step of calculating in what order charging spots are being utilized on an item by item basis;
a charging spot successive utilization tendency computation step of computing in what order the charging spots are being successively used, on the basis of the result of calculation in the charging spot ID utilization order calculation step; and
a successive utilization tendency distribution step of distributing a computation result to a user terminal held by a user.

11. The charger management method according to claim 10, wherein:
the charging data rearranging/separating step separates the charging data by the user identification number and rearranges the data by the charging start time at predetermined regular time intervals;
the charging spot ID utilization order calculation step calculates in what order the charging spot IDs are being utilized on the basis of all of the separated charging data; and
the charging spot successive utilization tendency computation step derives a charging spot successive utilization tendency indicating at which location the next charging is often performed after charging is performed at one location.

12. The charger management method according to claim 10 or 11, further comprising:
an inter-charging spot distance acquisition step of acquiring the distance between the charging spots; and
a charging spot elimination step of, when the charging spot successive utilization tendency is derived, comparing a first capacity value which is the difference between an at-end battery remaining amount at the time of previous charging and an at-start battery remaining amount at the time of ongoing current charging, with a second capacity value which is a minimum required battery capacity between the charging spots that is calculated from a maximum range that can be travelled based on the charger and the inter-charging spot distance, and eliminating from the charging data when the second capacity value is greater than the first capacity value.

13. The charger management method according to claim 12, comprising:
a statistics acquisition step of acquiring statistics data for the charging data of which the second capacity value is greater than the first capacity value; and
a communication step of transmitting the statistics data to a manager terminal device.

14. A program for causing a computer to implement the charger management method according to any one of claims 10 to 13.
